(19) Europäisches Patentamt

European Patent Office

Office européen des brevets

(11) **EP 0 672 522 B1**

(12) **EUROPÄISCHE PATENTSCHRIFT**

(45) Veröffentlichungstag und Bekanntmachung des Hinweises auf die Patenterteilung:
**14.07.2004 Patentblatt 2004/29**

(51) Int Cl.[7]: **B32B 27/20**, B32B 27/32, B65D 65/40, C08K 9/04 // C08K3/36, C08K7/18, C08K7/16

(21) Anmeldenummer: **95103398.4**

(22) Anmeldetag: **09.03.1995**

(54) **Siegelfähige orientierte Polyolefin-Mehrschichtfolie, Verfahren zu ihrer Herstellung und ihre Verwendung**

Sealable oriented polyolefin multilayered film, process for making it and its use

Feuille polyoléfinique multicouche thermoscellable et orientée, procédé de fabrication et son utilisation

(84) Benannte Vertragsstaaten:
**BE DE ES FR GB IT NL**

(30) Priorität: **17.03.1994 DE 4409119**

(43) Veröffentlichungstag der Anmeldung:
**20.09.1995 Patentblatt 1995/38**

(73) Patentinhaber: **Trespaphan GmbH & Co. KG**
**65479 Raunheim (DE)**

(72) Erfinder:
- **Murschall, Ursula, Dr.**
  **D-55283 Nierstein (DE)**
- **Peiffer, Herbert, Dr.**
  **D-55126 Mainz (DE)**
- **Schlögl, Gunter, Dr.**
  **D-65779 Kelkheim (DE)**

(74) Vertreter: **Luderschmidt, Schüler & Partner GbR**
**Patentanwälte,**
**Postfach 3929**
**65029 Wiesbaden (DE)**

(56) Entgegenhaltungen:
| | |
|---|---|
| EP-A- 0 242 055 | EP-A- 0 402 100 |
| EP-A- 0 430 472 | EP-A- 0 612 613 |
| EP-A- 0 613 770 | EP-A- 0 614 755 |
| EP-A- 0 623 463 | DE-A- 3 801 535 |

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft eine orientierte Polyolefin-Mehrschichtfolie, umfassend eine polyolefinische Basisschicht und mindestens eine siegelfähige Deckschicht. Die Folien zeichnen sich durch eine niedrige Trübung, einen hohen Glanz und einen niedrigen Reibungskoeffizienten aus.

Im Stand der Technik sind transparente Folien mit einem niedrigen Reibungskoeffizienten beschrieben. Die Anforderungen an die Verarbeitungsfähigkeit der Folien und deren Lauffähigkeit auf automatischen Maschinen sind im Laufe der Jahre ständig gestiegen. Aus diesem Grund werden immer niedrigere Reibungskoeffizienten gefordert, wobei heute der Begriff "niedrig" Reibungswerte in einer Größenordnung von 0,3 bis 0,1 umfaßt, wohingegen vor einigen Jahren eine Reibung von 0,4 bis 0,5 durchaus als ausgezeichnet niedrig galt.

Die DE-A-20 01 032 beschreibt Folien aus verschiedenen thermoplastischen Kunststoffen, deren Gleiteigenschaften durch Zusatz von Carbonsäureamiden und Antiblockmitteln verbessert sind. Da in die Deckschichten alleine keine ausreichende Menge an Gleitmittel eingearbeitet werden kann, wird die zusätzliche Einarbeitung der Amide in die Basisschicht empfohlen. Diese Folien haben einen Reibungskoeffizienten im Bereich von 0,4 bis 0,8 und entsprechen damit nicht mehr den heutigen Qualitätsanforderungen.

Die US-A-4,117,193 beschreibt mehrschichtige Folien aus einer Polypropylen-Basisschicht, welche ein Gleitmittel und ein Antiblockmittel und ein Antistatikmittel enthält. Die Deckschicht dieser Folien besteht aus einem Polymerblend und enthält zusätzlich ein Gleitmittel und ein Antiblockmittel. Das Polymerblend besteht aus einem Ethylen-Butylen-Copolymer und einem polyolefinischen Harz wie HDPE oder LDPE. Es ist beschrieben, daß die mangelhaften Gleiteigenschaften der Folien durch den Zusatz von Gleit- und Antiblockmitteln alleine nicht genügend verbessert werden können. Aus diesem Grund wird die Deckschicht durch Zusatz von HDPE oder LDPE in Kombination mit einem Gleit- und Antiblockmittel modifiziert. Die Reduktion des Reibungskoeffizienten ist nach den Beispielen und Vergleichsbeispielen wesentlich auf den Zusatz von HDPE zurückzuführen. Reine Copolymer-Deckschichten mit gleicher Additivzusammensetzung weisen Reibungskoeffizienten von 0,7 bis 0,8 auf. Die Folien kombinieren hervorragende Reibungskoeffizienten mit einer guten Bedruckbarkeit. Sie sind jedoch durch den Zusatz des reibungsvermindernden polyolefinischen Harzes in der Trübung und im Glanz stark verbesserungsbedürftig.

Die EP-A-0 402 100 beschreibt Polypropylenfolien, die 0,01 bis 0,5 Gew.-% eines sphärischen $SiO_2$ und 0,3 bis 5 Gew.-% eines Hydroxy-Fettsäure-Glycerids enthalten. Diese Erfindung betrifft einschichtige und mehrschichtige Folien. Mehrschichtige Ausführungsformen weisen sowohl in der Deckschicht als auch in der Basisschicht die Kombination von $SiO_2$ und Glycerid auf. Es ist beschrieben, daß die ausgewählten Mengen an $SiO_2$ und Glycerid wesentlich für die vorteilhaften Eigenschaften der Folien sind und Abweichungen von diesen Bereichen nicht mehr zu dem gewünschten Ergebnis führen. Die Folien zeichnen sich durch eine gute Transparenz, Gleitfähigkeit und Metallhaftung aus. Sie zeigen jedoch nach längerer Lagerzeit einen Belag auf der Oberfläche, der das Aussehen der Folien beeinträchtigt. Dieser Effekt ist auch als "blooming" bekannt und wird durch die Migration bestimmter Additive, insbesondere der Glyceride, an die Oberfläche der Folien verursacht.

Die EP-A-0 182 463 beschreibt eine mehrschichtige Folie, welche 0,05 bis 0,2 Gew.-% tertiäres aliphatisches Amin in der Basisschicht und eine Kombination von Siliconöl und $SiO_2$ in der siegelfähigen Deckschicht enthält. Nach der Beschreibung erhält man durch das überraschende Zusammenwirken von $SiO_2$, Siliconöl und Amin in Verbindung mit einer ausgewählten Deckschichtdicke von kleiner als 0,8 μm Folien mit Reibungskoeffizienten von 0,3 und kleiner. Trotz dieses hervorragenden Reibungskoeffizienten sind die Verarbeitungseigenschaften der Folie mangelhaft. Sie ist insbesondere nicht bedruckbar und daher für viele Anwendungen nicht geeignet.

Die EP-A-0 143 130 offenbart Folien, die ein Carbonsäureamid in der Basisschicht und ebenfalls die Kombination von Siliconöl und $SiO_2$ in der Deckschicht enthalten. Ähnlich wie in der oben erwähnten EP-A-0 182 463 wird eine synergistische Wirkung der drei ausgewählten Komponenten auf den Reibungskoeffizienten beschrieben. Auch diese Folien sind trotz ihrer vorteilhaften Gleitfähigkeit mangelhaft in der Verarbeitung. Auch ihnen fehlt die wichtige Eigenschaft Bedruckbarkeit.

Die EP-A-0 242 055 beschreibt die Verwendung eines nicht schmelzbaren, Organosiloxanharzpulvers mit einer dreidimensionalen Netzstruktur als Antiblockmittel in Folien. Sowohl das Siliconharz als auch das Propylenpolymer werden in Form eines Pulvers eingesetzt, welches aus Teilchen mit einer nahezu kugelförmigen Gestalt besteht, wobei diese Teilchenform durch eine entsprechende Gleichung für den tatsächlichen sphärischen Grad charakterisiert wird. Die Folien sollen gegenüber dem Stand der Technik bezüglich ihrer Transparenz, Antiblockeigenschaften, Gleitfähigkeit und bezüglich ihres Aussehens verbessert sein. Die Propylen-Antiblockmittel-Mischung kann auch als Deckschichtmaterial für coextrudierte Mehrschichtfolien eingesetzt werden. Diese coextrudierten Mehrschichtfolien sind jedoch bezüglich ihrer Transparenz und in ihren Glanzwerten noch verbesserungsbedürftig, insbesondere wenn die Deckschichten in üblichen Schichtdicken von über 0,5 μm aufgebracht werden. Darüber hinaus ist dieses Antiblockmittel sehr viel teurer als herkömmliche Antiblockmittel.

Die deutsche Patentanmeldung P 43 06 154.0 beschreibt die Verwendung eines organisch beschichteten $SiO_2$ als Antiblockmittel in siegelfähigen Folien. Der Reibungskoeffizient und das Verarbeitungsverhalten der Folie sind verbessert. Diese Schrift macht keine Aussage über die räumliche Form der Antiblockteilchen.

Die EP-A-0 353 368 beschreibt die Verwendung des in der EP-A-0 242 055 beschriebenen Siloxanharzpulvers in Verbindung mit einem Hydroxyfettsäureglycerids. Diese Folien eignen sich besonders gut für Vakuumbedampfungen, sind jedoch bezüglich Glanz und Transparenz sehr mangelhaft.

In Anwendung der bekannten Lehren hat sich gezeigt, daß bekannte Antiblockmittel teilweise nachteilige Auswirkungen auf bestimmte Folieneigenschaften haben. Durch das Antiblockmittel werden die Transparenz und der Glanz der Folie beeinträchtigt. Die Verbesserung der Reibung geht im allgemeinen mit einer Erhöhung der Oberflächenrauhigkeit einher. $SiO_2$ als Antiblockmittel führt bei der Herstellung der Folien zu Ablagerungen an der Düsenlippe und zu Abrieb auf den Walzen. Dadurch müssen die Düsenlippe und die Walzen häufig gereinigt werden, da die Folie sonst während der Produktion schlecht läuft und die Ablagerungen an der Düsenlippe zu einer Streifenbildung auf der Folie führen. Zusätzlich treten Probleme bei der Coronabehandlung auf. An den mit $SiO_2$-Abrieb behafteten Stellen der Walze schlägt die Coronabehandlung durch und führt zum sogenannten unerwünschten Rückseiteneffekt, wodurch beim Weiterverarbeiten der Folie wie z. B. Bedrucken oder Metallisieren reklamationsfähige Fehlstellen auftreten.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die sich durch eine Kombination der folgenden Eigenschaften auszeichnet:

- einen hohen Glanz
- eine niedrige Trübung
- ein niedriger Reibungskoeffizient
- eine niedrige Oberflächenrauhigkeit

Die der Erfindung zugrundeliegende Aufgabe wird gelöst durch eine Mehrschichtfolie der eingangs genannten Gattung, deren kennzeichnendes Merkmal darin besteht, daß die siegelfähige Deckschicht 0,01 bis 1 Gew.-%, bezogen auf das Gewicht der Deckschicht, annähernd kugelförmige keramische Teilchen enthält.

Die Basisschicht der erfindungsgemäßen Mehrschichtfolie enthält im wesentlichen ein Polyolefin, vorzugsweise ein Propylenpolymer, und gegebenenfalls weitere zugesetzte Additive in jeweils wirksamen Mengen. Im allgemeinen enthält die Basisschicht mindestens 50 Gew.-%, vorzugsweise 75 bis 100 Gew.-%, insbesondere 90 bis 100 Gew.-%, des Propylenpolymeren.

Das Propylenpolymere enthält im allgemeinen 90 bis 100 Gew.-%, vorzugsweise 95 bis 100 Gew.-%, insbesondere 98 bis 100 Gew.-%, Propylen und besitzt im allgemeinen einen Schmelzpunkt von 120 °C oder höher, vorzugsweise 150 bis 170 °C, und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Im allgemeinen kann die Basisschicht Gleitmittel, Antistatika, Stabilisatoren und/oder Neutralisationsmittel in jeweils wirksamen Mengen sowie gegebenenfalls Kohlenwasserstoffharz enthalten.

In einer weißen oder opaken bzw. weiß/opaken Ausführungsform enthält die Basisschicht zusätzlich Pigmente oder vakuoleniniziierende Teilchen bzw. eine Kombination aus diesen. Solche Folien haben eine Lichtdurchlässigkeit nach ASTM-D 1033-77 von höchstens 50 %, vorzugsweise von höchstens 70 %.

Pigmente umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,7 µm, insbesondere 0,01 bis 0,4 µm. Die Basisschicht enthält Pigmente im allgemeinen in einer Menge von 1 bis 25 Gew.-%, insbesondere 2 bis 20 Gew.-%, bevorzugt 5 bis 15 Gew.-%, jeweils bezogen auf die Basisschicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Opake Ausführungsformen der Folien enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 1 bis 6 μm, vorzugsweise 1,5 bis 5 μm. Die Basisschicht enthält vakuoleniniziierende Teilchen im allgemeinen in einer Menge von 1 bis 25 Gew.-%.

Übliche vakuoleniniziierende Teilchen der Basisschicht sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylenoder Polyethylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Weiß/opake Folien, welche mit vakuoleniniziierenden Teilchen und mit Pigment ausgerüstet sind, enthalten die vakuoleniniziierenden Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%.

Die Dichte der opaken bzw. weißen Folien kann innerhalb weiter Grenzen variieren und hängt von der Art und der Menge der Füllstoffe ab. Die Dichte liegt im allgemeinen im Bereich von 0,4 bis 1,1 g/cm$^3$. Pigmentierte Folien haben eine Dichte in der Größenordnung von 0,9 g/cm$^3$ oder darüber, vorzugsweise im Bereich von 0,9 bis 1,1 g/cm$^3$. Folien, welche nur vakuoleniniziierende Teilchen enthalten, haben eine Dichte von kleiner 0,9 g/cm$^3$. Für Verpackungsfolien mit einem Gehalt an vakuoleniniziierenden Teilchen von 2 bis 5 Gew.-% liegt die Dichte im Bereich von 0,6 bis 0,85 g/cm$^3$. Für Folien mit einem Gehalt an vakuoleniniziierenden Teilchen von 5 bis 14 Gew.-% liegt die Dichte im Bereich von 0,4 bis 0,8 g/cm$^3$. Folien, welche Pigmente und vakuoleniniziierende Teilchen enthalten, haben eine Dichte im Bereich von 0,5 bis 0,85 g/cm$^3$, je nach Verhältnis von Pigmentgehalt zu Gehalt an vakuoleniniziierenden Teilchen.

Die erfindungsgemäße Mehrschichtfolie kann gegebenenfalls (eine) weitere zwischen der Basis- und der Deckschicht aufgebrachte Zwischenschicht/en umfassen. Diese gegebenenfalls vorhandene/n Zwischenschicht/en enthält/enthalten im wesentlichen Propylenpolymere oder Polypropylenmischungen, wie sie vorstehend für die Basisschicht beschrieben wurden. Grundsätzlich können die Basisschicht und die Zwischenschicht/en aus gleichen oder verschiedenen Propylenpolymeren bzw. Mischungen aufgebaut sein. Die Schmelzflußindices der Polymeren für die Kern- und Zwischenschicht/en sollen möglichst gleich groß sein. Gegebenenfalls kann der MFI der Zwischenschicht/en etwas höher liegen, wobei eine Differenz von 20 % nicht überschritten werden soll. Gegebenenfalls können den Zwischenschichten Additive in jeweils wirksamen Mengen zugesetzt werden.

In einer bevorzugten Ausführungsform der erfindungsgemäßen Folie wird das Propylenpolymere der Basisschicht und/oder der Zwischenschicht peroxidisch abgebaut.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ =     Schmelzflußindex des Propylenpolymeren vor dem Zusatz des organischen Peroxids

MFI$_2$ =     Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die erfindungsgemäße Polyolefinfolie umfaßt weiterhin mindestens eine siegelfähige Deckschicht. Diese Deckschicht enthält im wesentlichen siegelfähige Polymere und annähernd kugelförmige keramische Teilchen sowie gegebenenfalls weitere Additive in jeweils wirksamen Mengen. Im allgemeinen enthält die Deckschicht 75 bis nahezu 100 Gew.-%, insbesondere 90 bis 99,5 Gew.-%, des siegelfähigen $\alpha$-olefinischen Polymers.

Beispiele für derartige siegelfähige $\alpha$-olefinische Polymere sind

statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder

statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 2 bis 20 Gew.-%, bevorzugt 4 bis 20 Gew.-%,

jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

jeweils bezogen auf das Gesamtgewicht des Polymerblends, bevorzugt sind.

Die vorstehend beschriebenen Co- und Terpolymeren weisen im allgemeinen einen Schmelzflußindex von 1,5 bis 30 g/10 min, vorzugsweise von 3 bis 15 g/10 min, und im allgemeinen einen Schmelzpunkt im Bereich von 120 bis 140 °C auf. Das vorstehend beschriebene Blend aus Co- und Terpolymeren hat im allgemeinen einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

Erfindungsgemäß enthält die Deckschicht annähernd kugelförmige Teilchen, welche im wesentlichen aus einem keramischen Material bestehen und gegebenenfalls eine Beschichtung aus einer organischen und/oder anorganischen Substanz aufweisen. Annähernd kugelförmige Teilchen umfassen im Sinne der vorliegenden Erfindung Teilchen, die der folgenden Bedingung genügen:

$$f = \sqrt{A/(\pi/4)}/D_{max}$$

worin f größer 0,7, vorzugsweise 0,8 bis 1, insbesondere 0,9 bis 1, ist und A die Querschnittsfläche in mm$^2$ und $D_{max}$ den maximalen Durchmesser in mm der Querschnittsfläche bedeuten. Der Faktor f ist Maß für den Grad der Kugelform der Teilchen. Je näher der Wert für f bei 1 liegt, desto näher kommt die Form der Teilchen der idealen Kugelform.

Als keramisches Material sind Natrium- und Aluminiumsilicate sowie entsprechende Mischsilicate bevorzugt. Der mittlere Teilchendurchmesser liegt im allgemeinen im Bereich von 0,5 bis 10 µm, vorzugsweise 1 bis 5 µm. Die Antiblockmittelteilchen sind im wesentlichen frei von Siloxanharzverbindungen. Gegebenenfalls weisen die kugelförmigen Teilchen eine organische und/oder anorganische Beschichtung auf, wobei auch diese Beschichtung im wesentlichen frei von Siloxan ist.

Zu den besonders geeigneten anorganischen Beschichtungen gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilicat oder Kieselsäure, in der wäßrigen Suspension ausgefällt. Gegebenenfalls kann die Beschichtung auch aus organischen Verbindungen mit polaren und unpolaren Gruppen bestehen bzw. diese enthalten. Bevorzugte organische Verbindungen sind Alkanole und Fettsäuren mit 8 bis 30 Kohlenstoffatomen in der Alkylgruppe, insbesondere Fettsäuren und primäre n-Alkanole mit 12 bis 24 Kohlenstoffatomen, sowie Maleinsäureanhydrid, Polypropylen- und Polyethylenwachse.

Überraschenderweise tritt bei den erfindungsgemäß verwendeten kugelförmigen keramischen Teilchen ein Zusammenwirken von Struktur und Substanz der Antiblockmittelteilchen auf. Es wurde gefunden, daß Folien mit bekannten kugelförmigen Teilchen aus Siliconharz in der Deckschicht eine schlechtere Trübung und einen schlechteren Glanz aufweisen. Gegenüber bekannten Antiblockmittelteilchen mit einer organischen Beschichtung wurde bei der erfindungsgemäßen Folie eine völlig unerwartete Verbesserung von Glanz, Trübung, Reibung und Oberflächenrauhigkeit der Folie gefunden. Opake Ausführungsformen der Folie zeigen ebenfalls einen verbesserten Glanz sowie eine niedrige Reibung und eine niedrige Oberflächenrauhigkeit. Naturgemäß spielt die Trübung bei opaken Folien keine Rolle.

Die erfindungsgemäße Mehrschichtfolie umfaßt die vorstehend beschriebene Basisschicht und mindestens eine Deckschicht sowie gegebenenfalls weitere Schichten. Bevorzugt sind dreischichtige Ausführungsformen, welche auf beiden Seiten der Basisschicht eine Deckschicht aufweisen, welche bezüglich ihrer Dicke und Zusammensetzung gleich oder verschieden sein können. Daneben sind fünfschichtige Ausführungsformen bevorzugt, welche eine Basisschicht und auf beiden Seiten der Basisschicht aufgebrachte Zwischenschichten und beidseitige Deckschichten aufweisen.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 70 μm, insbesondere 10 bis 50 μm, wobei die Basisschicht etwa 50 bis 90 % der Gesamtfoliendicke ausmacht.

Die Dicke der Deckschicht/en ist im allgemeinen größer als 0,2 μm und liegt vorzugsweise im Bereich von 0,3 bis 2 μm, insbesondere >0,5 bis 1 μm, wobei beidseitige Deckschichten gleich oder verschieden dick sein können.

Die Dicke der gegebenenfalls vorhandenen Zwischenschicht/en beträgt im allgemeinen jeweils unabhängig voneinander 1 bis 12 μm, wobei Zwischenschichtdicken von 2 bis 8 μm, insbesondere 3 bis 6 μm, bevorzugt sind. Die angegebenen Werte beziehen sich jeweils auf eine Zwischenschicht.

Neben diesem ausgewählten Deckschichtadditiv kann die erfindungsgemäße Mehrschichtfolie in einer oder mehreren Schichten zusätzlich Neutralisationsmittel, Stabilisatoren, Gleitmittel, Kohlenwasserstoffharze und/oder Antistatika enthalten. Die nachstehenden Angaben in Gewichtsprozent beziehen sich auf das Gewicht der jeweiligen Schicht, der das Additiv zugesetzt ist.

Neutralisationsmittel sind vorzugsweise Dihydrotalcit, Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 $m^2$/g. Im allgemeinen wird das Neutralisationsmittel in einer Menge von 0,02 bis 0,1 Gew.-% zugesetzt.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als500 g/molbevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Die Kohlenwasserstoffharze werden bevorzugt der Basisschicht und/oder der/den Zwischenschicht/en zugesetzt. Die wirksame Menge an niedrigmolekularem Harz beträgt 1 bis 20 Gew.-%, vorzugsweise 2 bis 10 Gew.-%, bezogen auf die Schicht.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C, bestimmt nach ASTM E-28. Unter den zahlreichen niedrigmolekularen Harzen sind die Kohlenwasserstoffharze bevorzugt, und zwar in Form der Erdölharze (Petroleumharz), Styrolharze, Cyclopentadienharze und Terpenharze (diese Harze sind in Ullmanns Encyklopädie der technischen Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%. Als Antistatikum ist weiterhin Glycerinmonostearat bevorzugt.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können oder via Masterbatch-Technik zugegeben werden. Die den einzelnen Schichten der Folie entsprechenden Schmelzen werden dann gleichzeitig durch eine Flachdüse (Breitschlitzdüse) coextrudiert, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 7:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 20 bis 90 °C zu halten.

Die Temperaturen, bei denen Längs- und Querstreckung durchgeführt werden, können variieren. Im allgemeinen wird die Längsstreckung vorzugsweise bei 100 bis 150 °C und die Querstreckung vorzugsweise bei 155 bis 190 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie ist gegenüber bekannten Folien mit niedrigem Reibungskoeffizienten in ihrem Glanz und in ihrer Trübung verbessert und zeichnet sich ebenfalls durch einen sehr niedrigen Reibungskoeffizienten und durch eine niedrige Oberflächenrauhigkeit aus. Zusätzlich hat die Folie eine niedrige Siegelanspringtemperatur. Der Gleitreibungskoeffizient von gleitmittelfreien Ausführungsformen der Folien liegt im allgemeinen im Bereich von 0,3 bis 0,7, vorzugsweise 0,3 bis 0,5. Folien, welche zusätzlich ein Gleitmittel wie z. B. Fettsäureamid, insbesondere Erucasäureamid, enthalten, haben einen noch weiter erniedrigten Gleitreibungskoeffizienten. Dieser liegt bei einer Folie mit Erucasäureamid in der Basisschicht im allgemeinen im Bereich von 0,05 bis 0,3, vorzugsweise 0,1 bis 0,2. Der Glanz der erfindungsgemäßen Folie liegt im Bereich von 90 bis 130, vorzugsweise 105 bis 130. Die Trübung der transparenten Ausführungsformen liegt im Bereich von 0,9 bis 3,0, vorzugsweise im Bereich von 0,9 bis 2,0.

Die Erfindung wird nun anhand von Ausführungsbeispielen noch näher erläutert.

**Beispiel 1**

Es wurde durch Coextrusion und anschließende stufenweise Orientierung in Längs- und Querrichtung eine dreischichtige Folie mit einer Gesamtdicke von 20 µm und einem ABA-Schichtaufbau hergestellt, d. h. die Basisschicht B war von zwei gleichen Deckschichten A umgeben.

Die Folie wurde vor der Aufrollung auf der Walzenseite einer einseitigen Coronabehandlung unterzogen. Die Walzenseite ist diejenige Seite der Folie, mit der sie auf der ersten Abzugswalze aufliegt. Die Oberflächenspannung betrug auf dieser Seite infolge dieser Behandlung 39 bis 40 mN/m. Alle Schichten enthielten zur Stabilisierung 0,13 Gew.-% Pentaerythrityl-Tetrakis-4-(3,5-ditertiärbutyl-4-hydroxyphenyl)-propionat (®Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 4 Gew.-% und einem Schmelzbereich von 160 bis 162 °C. Der Schmelzflußindex des Polypropylenhomopolymeren betrug 3,4 g/10 min bei 230 °C und 21,6 N Belastung (DIN 53 735). Die Basisschicht enthielt 0,12 Gew.-% Erucasäureamid mit einem Schmelzbereich von 78 bis 82 °C und 0,12 Gew.-% N,N-bis-Ethoxyalkylamin (®Armostat 300).

Die polyolefinischen Deckschichten bestanden im wesentlichen aus einem Ethylen-Propylen-Buten-1-Terpolymeren mit einem Gehalt von 3,5 Gew.-% Ethylen, 88,5 Gew.-% Propylen und 8 Gew.-% Buten-1. Die Deckschichten enthielten 0,33 Gew.-% eines keramischen, kugelförmigen Antiblockmittels mit einem mittleren Teilchendurchmesser von 2 µm. Die Dicke der Deckschichten betrug jeweils 0,8 µm.

**Vergleichsbeispiel 1**

Beispiel 1 wurde wiederholt. Als Antiblockmittel wurden jedoch 0,33 Gew.-% eines vernetzten Siliconharzpulvers mit einem mittleren Teilchendurchmesser von 2 µm (®Tospearl 20 der Firma Toshiba Silicone Co., Ltd.) eingesetzt.

**Vergleichsbeispiel 2**

Beispiel 1 wurde wiederholt. Als Antiblockmittel wurden jedoch 0,33 Gew.-% eines organisch gecoateten Siliciumdioxids mit einem mittleren Teilchendurchmesser von 2 µm (®Sylobloc 44 der Firma Grace) eingesetzt.

**Beispiel 2**

Beispiel 1 wurde wiederholt. Die Basisschicht enthielt jedoch kein Erucasäureamid.

**Vergleichsbeispiel 3**

Vergleichsbeispiel 1 wurde wiederholt. Die Basisschicht enthielt jedoch kein Erucasäureamid.

**Vergleichsbeispiel 4**

Vergleichsbeispiel 2 wurde wiederholt. Die Basisschicht enthielt jedoch kein Erucasäureamid.

Die Eigenschaften der Folien gemäß den Beispielen und Vergleichsbeispielen sind in der nachstehenden Tabelle zusammengefaßt.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Bestimmung der Siegelanspringtemperatur

Mit dem Siegelgerät HSG/ET der Firma Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 1,5 N/mm$^2$ (Gerät: Brugger Typ NDS, einseitig beheizte Siegelbacke) versiegelt. Die Siegelnahtfestigkeit wurde nach der T-Peel-Methode bestimmt.

Reibung

Die Reibung wurde in Anlehnung an DIN 53 375 bestimmt. Die Gleitreibungszahl wurde 14 Tage nach der Produktion gemessen.

Oberflächenspannung

Die Oberflächenspannung wurde mittels der sogenannten Tintenmethode (DIN 53 364) bestimmt.

Rauhigkeit

Die Rauhigkeit wurde nach DIN 4768 bei einem Cut-off von 0,25 mm bestimmt.

Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

## TABELLE

| | Glanz | | Trübung | | Siegelanspringtemperatur MST [°C] 10 N/cm²; 0,5 s | | Gleitreibungszahl | Rauhigkeit | |
| | Meßwinkel 20° | Meßwinkel 60° | Hölz 4lagig | ASTM-D 1003 1lagig | A./A | B./B | A./B | A./A | B./B |
|---|---|---|---|---|---|---|---|---|---|
| B1 | 115 | 145 | 22 | 1,4 | 112 | 118 | 0,18 | 0,65 | 0,51 |
| VB1 | 102 | 133 | 43 | 4,2 | 116 | 120 | 0,17 | 0,60 | 0,77 |
| VB2 | 102 | 128 | 41 | 3,7 | 116 | 120 | 0,30 | 1,29 | 1,46 |
| B2 | 115 | 145 | 22 | 1,4 | 112 | 118 | 0,48 | 0,65 | 0,51 |
| B3 | 102 | 133 | 43 | 4,2 | 116 | 120 | 0,40 | 0,60 | 0,77 |
| B4 | 102 | 128 | 41 | 3,7 | 116 | 120 | 0,59 | 1,29 | 1,46 |

B = Beispiel
VB = Vergleichsbeispiel
A = Walzenseite
B = Luftseite

10

**Patentansprüche**

1. Orientierte Polyolefin-Mehrschichtfolie, umfassend eine polyolefinische Basisschicht und mindestens eine siegelfähige Deckschicht, **dadurch gekennzeichnet, daß** die siegelfähige Deckschicht 75 bis nahezu 100 Gew.-% statistische Ethylen-Propylen-Copolymere mit einem Ethylengehalt von 1 bis 10 Gew.-%, bezogen auf das Gesamtgewicht des Copolymeren oder

   statistische Propylen-Butylen-1-Copolymere mit einem Butylengehalt von 2 bis 25 Gew.-%, bezogen auf das Gesamtgewicht des Copolymeren, oder

   statistische Ethylen-Propylen-Butylen-1-Terpolymere mit einem Ethylengehalt von 1 bis 10 Gew.-% und einem Butylen-1-Gehalt von 2 bis 20 Gew.-%, jeweils bezogen auf das Gesamtgewicht des Terpolymeren, oder

   eines Blend aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Polymerblends,

   und

   0,01 bis 1 Gew.-%, bezogen auf das Gewicht der Deckschicht, annähernd kugelförmige keramische Teilchen enthält.

2. Polyolefin-Mehrschichtfolie nach Anspruch 1, **dadurch gekennzeichnet, daß** die kugelförmigen keramischen Teilchen eine organische und/oder anorganische Beschichtung aufweisen.

3. Polyolefin-Mehrschichtfolie nach einem der Ansprüche 1 und/oder 2, **dadurch gekennzeichnet, daß** die kugelförmigen keramischen Teilchen einen mittleren Teilchendurchmesser von 0,5 bis 10 $\mu$m, vorzugsweise 1 bis 5 $\mu$m, aufweisen.

4. Polyolefin-Mehrschichtfolie nach einem der Ansprüche 1 bis 3, **dadurch gekennzeichnet, daß** die kugelförmigen keramischen Teilchen im wesentlichen aus Natrium-, Aluminium- oder entsprechenden Mischsilicaten bestehen.

5. Polyolefin-Mehrschichtfolie nach einem der Ansprüche 1 bis 4, **dadurch gekennzeichnet, daß** die kugelförmigen keramischen Teilchen im wesentlichen kein vernetztes Siliconharz enthalten.

6. Polyolefin-Mehrschichtfolie nach einem der Ansprüche 1 bis 5, **dadurch gekennzeichnet, daß** die kugelförmigen keramischen Teilchen der folgenden Bedingung genügen:

$$f \sqrt{A/(\ /4)}/D_{max}$$

   worin f größer 0,7, vorzugsweise 0,8 bis 1, insbesondere 0,9 bis 1, ist und A die Querschnittsfläche in mm$^2$ und $D_{max}$ den maximalen Durchmesser in mm der Querschnittsfläche bedeuten.

7. Polyolefin-Mehrschichtfolie nach einem der Ansprüche 1 bis 6, **dadurch gekennzeichnet, daß** die Deckschichten eine Dicke von 0,2 bis 2 $\mu$m aufweisen.

8. Polyolefin-Mehrschichtfolie nach einem der Ansprüche 1 bis 7, **dadurch gekennzeichnet, daß** die Mehrschichtfolie eine Lichtdurchlässigkeit, gemessen nach ASTM-D 1039-77, von höchstens 50 % hat.

9. Verfahren zur Herstellung der Polyolefin-Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 20 und 90 C liegt, abgezogen wird, die Folie biaxial gestreckt wird mit einem Längsstreckverhältnis von 4:1 bis 7:1 und einem Querstreckverhältnis von 7:1 bis 11:1, die biaxial gestreckte Folie thermofixiert, gegebenenfalls coronabehandelt und anschließend aufgewickelt wird.

10. Verwendung einer Polyolefin-Mehrschichtfolie nach einem oder mehreren der Ansprüche 1 bis 8 als Verpackungsfolie.

11. Verwendung einer Polyolefin-Mehrschichtfolie nach einem oder mehreren der Ansprüche 1 bis 8 zur Bedruckung und Kaschierung.

12. Laminat, umfassend eine Polyolefin-Mehrschichtfolie nach einem oder mehreren der Ansprüche 1 bis 8 und Papier oder Pappe oder weitere Folie aus thermoplastischem Kunststoff.

**Claims**

1. Oriented multilayer polyolefin film including a polyolefinic base layer and at least one heat-sealable top layer, **characterized in that** the heat-sealable top layer comprises from 75 to virtually 100% by weight of random ethylene-propylene copolymers having an ethylene content of from 1 to 10% by weight, based on the total weight of the copolymer, or

   random propylene-1-butylene copolymers having a butylene content of from 2 to 25% by weight, based on the total weight of the copolymer, or

   random ethylene-propylene-1-butylene terpolymers having an ethylene content of from 1 to 10% by weight and a 1-butylene content of from 2 to 20% by weight, in each case based on the total weight of the terpolymer, or

   a blend of an ethylene-propylene-1-butylene terpolymer and a propylene-1-butylene copolymer having an ethylene content of from 0.1 to 7% by weight and a propylene content of from 50 to 90% by weight and a 1-butylene content of from 10 to 40% by weight, in each case based on the total weight of the polymer blend,

   and

   from 0.01 to 1% by weight, based on the weight of the top layer, of approximately spherical ceramic particles.

2. Multilayer polyolefin film according to Claim 1, **characterized in that** the spherical ceramic particles have an organic and/or inorganic coating.

3. Multilayer polyolefin film according to one of Claims 1 and/or 2, **characterized in that** the spherical ceramic particles have a mean particle diameter of from 0.5 to 10 μm, preferably from 1 to 5 μm.

4. Multilayer polyolefin film according to one of Claims 1 to 3, **characterized in that** the spherical ceramic particles essentially consist of sodium silicate, aluminium silicate or corresponding mixed silicates.

5. Multilayer polyolefin film according to one of Claims 1 to 4, **characterized in that** the spherical ceramic particles essentially contain no crosslinked silicone resin.

6. Multilayer polyolefin film according to one of Claims 1 to 5, **characterized in that** the spherical ceramic particles satisfy the following condition:

$$f \ \sqrt{A/(l/4)}/D_{max}$$

   in which f is greater than 0.7, preferably from 0.8 to 1, in particular from 0.9 to 1, and A is the cross-sectional area in $mm^2$ and $D_{max}$ is the maximum diameter of the cross-sectional area in mm.

7. Multilayer polyolefin film according to one of Claims 1 to 6, **characterized in that** the top layers have a thickness of from 0.2 to 2 μm.

8. Multilayer polyolefin film according to one of Claims 1 to 7, **characterized in that** the multilayer film has a light transparency, measured in accordance with ASTM-D 1039-77, of at most 50%.

9. Process for the production of the multilayer polyolefin film according to Claim 1, in which the melts corresponding to the individual layers of the film are coextruded through a flat-film die, the coextruded film is taken off over a take-off roll whose temperature is between 20 and 90°C, the film is biaxially stretched with a longitudinal stretching ratio of from 4:1 to 7:1 and a transverse stretching ratio of from 7:1 to 11:1, and the biaxially stretched film is heat-set, optionally corona-treated and subsequently wound up.

10. Use of a multilayer polyolefin film according to one or more of Claims 1 to 8 as packaging film.

11. Use of a multilayer polyolefin film according to one or more of Claims 1 to 8 for printing and lamination.

12. Laminate including a multilayer polyolefin film according to one or more of Claims 1 to 8 and paper or board or a further thermoplastic film.

# EP 0 672 522 B1

**Revendications**

1. Film multicouches de polyoléfine orienté, comprenant une couche de base de polyoléfine et au moins une couche de surface thermoscellable, **caractérisé en ce que** la couche de surface thermoscellable contient 75 à près de 100 % en poids de copolymère d'éthylène-propylène statistique avec une teneur en éthylène de 1 à 10 % en poids, rapporté au poids total du copolymère, ou un copolymère de propylène-butylène-1 statistique avec une teneur en butylène de 2 à 25 % en poids, rapportés au poids total du copolymère, ou un terpolymère d'éthylène-propylène-butylène-1 statistique avec une teneur en éthylène de 1 à 10 % en poids et une teneur en butylène-1 de 2 à 20 % en poids, rapporté respectivement au poids total du terpolymère, ou un blend d'un terpolymère d'éthylène-propylène-butylène-1 et d'un copolymère de propylène-butylène-1 avec une teneur en éthylène de 0,1 à 7 % en poids et une teneur en propylène de 50 à 90 % en poids et une teneur en butylène-1 de 10 à 40 % en poids, rapportés respectivement au poids total du blend polymère, et
0,01 à 1 % en poids, rapporté au poids de la couche de surface de particules céramique à géométrie approximativement sphérique.

2. Film multicouches de polyoléfine selon la revendication 1, **caractérisé en ce que** les particules céramique sphériques présentent une enduction organique et/ou inorganique.

3. Film multicouches de polyoléfine selon l'une des revendications 1 et/ou 2, **caractérisé en ce que** les particules céramique sphériques font état d'un diamètre de particule moyen de 0,5 à 10 μm, de préférence de 1 à 5 μm.

4. Film multicouches de polyoléfine selon l'une ou l'autre des revendications 1 à 3, **caractérisé en ce que** les particules céramique sphériques se composent pour l'essentiel de silicate de sodium, de silicate d'aluminium ou de silicates mixtes correspondants.

5. Film multicouches de polyoléfine selon l'une ou l'autre des revendications 1 à 4, **caractérisé en ce que** les particules céramique sphériques ne contiennent pour l'essentiel pas de résine silicone réticulée.

6. Film multicouches en polyoléfine selon l'une ou l'autre des revendications 1 à 5, **caractérisé en ce que** les particules céramique sphériques répondent à la condition suivante :

$$f \sqrt{A/(l/4)}/D_{max}$$

fétant supérieur à 0,7, de préférence de 0,8 à 1, en particulier de 0,9 à 1 et A étant la superficie de la section des particules en mm$^2$ et D$_{max}$ le diamètre maximal en mm de la superficie de la section.

7. Film multicouches de polyoléfine selon l'une ou l'autre des revendications 1 à 6, **caractérisé en ce que** les couches de surface ont une épaisseur de 0,2 à 2 μm.

8. Film multicouches de polyoléfine selon l'une ou l'autre des revendications 1 à 7, **caractérisé en ce que** le film multicouches a une perméabilité à la lumière, mesurée d'après ASTM-D 1039-77, de tout au plus 50 %.

9. Procédé destiné à la fabrication d'un film multicouches de polyoléfine selon la revendication 1, avec lequel les matières fondues correspondant à chacune des couches du film sont coextrudées à travers une filière plate, le film coextrudé étant débité sur un rouleau débiteur dont la température se situe entre 20 et 90 °C, le film étant biaxialement étiré dans un rapport d'étirage longitudinal de 4 à 1 jusqu'à 7 à 1 et dans un rapport d'étirage transversal de 7 à 1 jusqu'à 11 à 1, le film biaxialement étiré étant thermofixé, le cas échéant soumis à un traitement corona et ensuite mis en bobine.

10. Utilisation d'un film multicouches de polyoléfine selon l'une ou plusieurs des revendications 1 à 8 en tant que film d'emballage.

11. Utilisation d'un film multicouches de polyoléfine selon l'une ou plusieurs des revendications 1 à 8, destiné à l'impression ou au contre-collage.

12. Complexe comprenant un film multicouches de polyoléfine selon l'une ou plusieurs des revendications 1 à 8, et du papier ou du carton ou un autre film en un matériau thermoplastique.